# EUROPÄISCHE PATENTSCHRIFT

(11) **EP 4 227 651 B1**
(45) Veröffentlichungstag und Bekanntmachung des Hinweises auf die Patenterteilung: **20.11.2024**
(21) Anmeldenummer: 22156823.1
(22) Anmeldetag: 15.02.2022
(51) Int. Cl.: G01F 23/28, G01F 23/284, G01F 25/20, G01S 7/292, G01S 7/40, G01S 13/88

(54) **VERFAHREN ZUM AUTOMATISIERTEN ERSTELLEN EINER KOMPENSATIONSECHOKURVE**
METHOD FOR THE AUTOMATIC GENERATION OF A COMPENSATING ECHO CURVE
PROCÉDÉ DE CRÉATION AUTOMATISÉE D'UNE COURBE D'ÉCHO DE COMPENSATION

(43) Veröffentlichungstag der Anmeldung: 16.08.2023
(73) Patentinhaber: VEGA Grieshaber KG, 77709 Wolfach (DE)
(72) Erfinder: HENGSTLER, Clemens, 77716 Haslach (DE); KASPAR, Stefan, 77716 Hofstetten (DE)
(74) Vertreter: Maiwald GmbH

(56) Entgegenhaltungen:
- EP-B1- 1 186 906
- WO-A1-2021/239260
- CA-E- 2 142 740
- US-A1- 2020 355 536

## Beschreibung

### Gebiet der Erfindung

Die Erfindung betrifft ein Verfahren zum automatisierten Erstellen einer Kompensationsechokurve, für eine Füllstandmessung eines Füllgutes in einem Behälter mittels eines Radarsensors. Weiterhin betrifft die Erfindung eine Radarsensorvorrichtung, eine Verwendung, ein Programmelement und ein computerlesbares Medium.

### Hintergrund

Radarsensoren können z.B. zur Messung von Füllständen von Flüssigkeiten oder Feststoffen verwendet werden. In zumindest einigen Fällen befinden sich die zu messenden Flüssigkeiten und Feststoffe in mobilen Behältern aus Kunststoff, aus Glas oder anderen nicht-leitfähigen Materialien, so dass der Behälter für Radarwellen durchlässig ist. Der Behälter kann beispielsweise unter einem fest installierten Radarsensor platziert werden, sodass der im Behälter befindliche Füllstand durch eine Wand - z.B. durch die Oberseite - des Behälters hindurch mittels des Radarsensors gemessen werden kann. Allerdings kann dabei, ohne weitere Maßnahmen, nur jeweils ein gleichartiger Behältertyp vermessen werden, da der Behälter, und/oder Gegenstände in dem Behälter, Störsignale erzeugen kann. Daher kann es erforderlich sein, bei jedem Wechsel des Behälters jeweils eine neue Kompensationsechokurve zu erstellen, um die Störsignale wirksam ausblenden zu können und so eine genaue Messung des Füllstands zu ermöglichen.

Die Druckschrift EP 1 186 906 B1 betrifft ein Verfahren zur Messung von Signallaufzeiten bzw. zur Entfernungsmessung, insbesondere zur Messung des Füllstandes in Behältern. Die Druckschrift CA 2 142 740 A1 betrifft eine Anordnung zur Messung eines Füllstands in einem Behälter.

Die Druckschrift WO 2021 239 260 A1 offenbart einen autarken Radarsensor 103, der auf einen Behälter angeordnet wird.

Die Druckschrift US 2020 355 536 A1 offenbart eine Füllstandsmesseinrichtung, die auf einem IBC angeordnet wird.

Es ist Aufgabe der Erfindung, ein Verfahren zum zumindest teilweise automatisierten Erstellen einer Kompensationsechokurve zur Verfügung zu stellen. Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft ein Verfahren zum automatisierten Erstellen einer Kompensationsechokurve für eine Füllstandmessung eines Füllgutes in einem Behälter mittels eines Radarsensors wobei der Radarsensor an einer Befestigung oberhalb des Behälters angeordnet ist und wobei der Behälter eine Oberseite aufweist, die für Radarwellen durchlässig ist, das Verfahren aufweisend die Schritte: erkennen des Behälters;
erstellen einer vorläufigen Kompensationsechokurve, wobei die vorläufige Kompensationsechokurve einer Echokurve eines leeren Behälters entspricht;
erfassen einer ersten Echokurve, wobei die erste Echokurve mindestens ein erstes Amplitudenmaximum und ein zweites Amplitudenmaximum aufweist, wobei das erste Amplitudenmaximum eine geringere Entfernung zu einer Antenne des Radarsensors aufweist als das zweite Amplitudenmaximum; und
erstellen der Kompensationsechokurve durch Bildung eines Maximums aus der vorläufigen Kompensationsechokurve und dem ersten Amplitudenmaximum.

Für eine Füllstandmessung eines Füllgutes wird von einem Radarsensor - und/oder von einem Ultraschallsensor - eine sog. Echokurve erzeugt. Für eine Echokurve werden Radarwellen (bzw. Ultraschallwellen) in einen Behälter gesendet und die vom dem Behälter reflektierten Radarwellen (die Echos) auf einem Diagramm aufgetragen, dessen y-Achse die Intensität oder Amplitude der Echos und dessen x-Achse die Entfernung der Echos (z.B. zu einer Antenne des Radarsensors) wiedergibt. Eine derartige "Roh-Echokurve" kann aber nicht nur die erwünschte Information - z.B. den Füllstand und/oder einen Grenzstand des Behälters - enthalten, sondern auch Störsignale, die beispielsweise durch Reflexionen von einem Deckel und anderen Wänden des Behälters, von Einbauten oder Anhaftungen an Deckel oder Behälter oder Ablagerungen auf dem Behälter wie zum Beispiel Schmutz oder Kondensat und/oder durch andere Radarsignale verursacht sein können. Die Störsignale können für jeden Behälter unterschiedlich sein. Für eine Auswertung der "Roh-Echokurve" wird daher in vielen Fällen eine Kompensationsechokurve verwendet, die mit der "Roh-Echokurve" für eine sog. "Störsignalausblendung" verrechnet wird, z.B. von der "Roh-Echokurve" subtrahiert wird. Weil die Störsignale für jeden Behälter unterschiedlich sein können, muss für eine genaue Messung des Füllstands die Kompensationsechokurve für jeden Behälter aufs Neue erstellt werden. Das zumindest teilweise automatisierten Erstellen der Kompensationsechokurve kann den dafür nötigen Aufwand deutlich reduzieren.

Das Verfahren eignet sich insbesondere für einen Behälter, der eine Oberseite aufweist, die für Radarwellen (bzw. Ultraschallwellen) durchlässig ist. Dies ist beispielsweise bei Behältern aus Kunststoff, aus Glas oder anderen nicht-leitfähigen Materialien der Fall. Wenn der Radarsensor so angeordnet ist, dass die Radarwellen zumindest teilweise durch eine Seitenwand des Behälters eintreten, dann sollte zumindest dieser Teil der Seitenwand Wellen-durchlässig sein. Das Füllgut kann z.B. eine Flüssigkeit, ein Feststoff und/oder eine Mischung (z.B. eine Suspension) sein.

Bevor eine "reale" Messung - d.h. eine Messung, die zur Erzielung von Nutzdaten dient und nicht zur Eichung etc. - durchgeführt wird, wird eine vorläufige Kompensationsechokurve erstellt. Die vorläufige Kompensationsechokurve entspricht einer Echokurve eines leeren Behälters, wobei auf diese Echokurve ein Offset addiert werden kann. Der Offset kann beispielsweise zwischen +1 dB und +6 dB betragen. Die Addition des Offsets kann vorteilhafterweise dazu beitragen, dass Nutzwerte einer Messung sich deutlich (bzw. deutlicher als ohne Offset) von der vorläufigen Kompensationsechokurve abheben. Die vorläufige Kompensationsechokurve kann beispielsweise unmittelbar nach einer Herstellung des Radarsensors bzw. Feldgeräts und/oder vor Auslieferung des Feldgeräts erstellt werden. Die vorläufige Kompensationsechokurve wird daher gelegentlich als "Werkstörsignalausblendung" bezeichnet. In zumindest einigen Fällen kann vor dem Erstellen der vorläufigen Kompensationsechokurve eine erste Eichung, Parametrierung, etc. des Radarsensors vorgenommen werden.

Nachdem der Behälter unter dem Radarsensor angeordnet ist, wird eine erste Echokurve erfasst. Die erste Echokurve ist also eine sogenannte "Live-Messung". Die erste Echokurve weist mindestens ein erstes Amplitudenmaximum und ein zweites Amplitudenmaximum auf, wobei das erste Amplitudenmaximum eine geringere Entfernung zu einer Antenne des Radarsensors aufweist als das zweite Amplitudenmaximum. Dabei kann das erste Amplitudenmaximum als ein Echo von der Oberseite des Behälters interpretiert werden. Das zweite Amplitudenmaximum kann als ein Echo von der Füllgutoberfläche interpretiert werden; dies kann dem Füllstand des Füllgutes entsprechen und/oder zur Bestimmung eines Grenzstands verwendet werden.

Auf dieser Basis kann ein Erstellen der Kompensationsechokurve durchgeführt werden. Dies geschieht durch Bildung eines Maximums aus der vorläufigen Kompensationsechokurve und dem ersten Amplitudenmaximum. Als Algorithmus kann das Erstellen der Kompensationsechokurve also folgendermaßen formuliert werden:

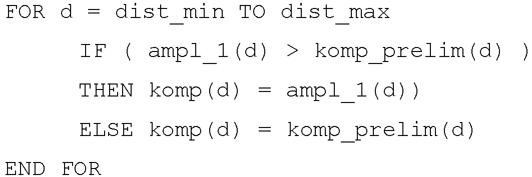

Die IF-Konstruktion in der Mitte der FOR-Schleife entspricht dabei einer Maximum-Funktion "max (a,b)", welche ein Maximum der Werte a oder b liefert. Die IF-Konstruktion lautet damit:

```
     komp(d) = max (komp_prelim(d), ampl_1(d))
```

Die Maximum-Funktion kann dabei beispielsweise als Unterprogramm, als C-Makro oderwenn dies von einem Prozessor unterstützt wird - als Hardware-Funktion (z.B. als Hardware-Befehl) realisiert werden.

Dabei ist:
d: Distanz von der Antenne des Radarsensors, z.B. in äquidistanten Schritten;
dist_min: minimale Distanz von der Antenne, z.B. 0 cm;
dist_max: maximale Distanz von der Antenne, z.B. maximale Entfernung vom Behälterboden;
komp(d): Amplitude der Kompensationsechokurve an der Distanz d;
max: Maximum-Operation;
komp_prelim(d): Amplitude der vorläufigen Kompensationsechokurve an d;
ampl_1(d): Amplitude des ersten Amplitudenmaximums an d.

Durch dieses automatisierte Erstellen der Kompensationsechokurve kann der Aufwand zur Parametrierung der Messung und/oder der dafür verwendeten Radarsensorvorrichtung deutlich reduziert werden. Dies kann besonders vorteilhaft sein, wenn der Füllstand für Standardbehälter bestimmt werden soll, die zumindest für einige Anwendungen häufiger ausgetauscht werden können. Dadurch können die Füllstände in unterschiedlichen Behältertypen ohne manuelles Nachparametrieren mit dem gleichen Radarsensor sicher und genau gemessen werden. Darüber hinaus kann diese - für jeden Behälter individuell ermittelte - Kompensationsechokurve nicht nur Störsignale z.B. von einem Nahbereich der Radarantenne ausgeblendet werden, sondern auch Störsignale durch beschädigte, verschmutzte oder nicht positionsgenau platzierte Behälter oder durch Kondensat am Behälter verursachte Störsignale. Es kann also eine automatische Anpassung der Störsignalausblendung stattfinden, wenn sich die Position und/oder Amplitude des Störsignalechos verändert, zum Beispiel bei Tausch bzw. Wechsel des Behälters, dessen Füllstand bestimmt werden soll, oder auch unter Berücksichtigung von Kondensat oder Anhaftungen.

In einigen Ausführungsformen weist die vorläufige Kompensationsechokurve und/oder die Kompensationsechokurve zusätzlich einen Offset auf. Der Offset kann beispielsweise zwischen +1 dB und +6 dB betragen. Die Addition des ersten Offsets kann vorteilhafterweise dazu beitragen, dass Nutzwerte einer Messung sich deutlich (bzw. deutlicher als ohne Offset) von der vorläufigen Kompensationsechokurve abheben.

In einigen Ausführungsformen ist das erste Amplitudenmaximum zwischen 20 cm und 150 cm, insbesondere zwischen 40 cm und 100 cm, von der Antenne des Radarsensors entfernt. Alternativ oder zusätzlich kann das erste Amplitudenmaximum abhängig von einer maximalen Höhe des Behälters definiert werden, z.B. 10 %, 20 %, etc., bis z.B. 50 % der maximalen Behälterhöhe. Diese Definitionen können vorteilhafterweise als ein "parametrierbarer Suchbereich" für eine Position des ersten Echos verwendet werden, d.h. damit kann plausibilisiert werden, ob es sich bei dem gemessenen ersten Amplitudenmaximum tatsächlich um das "erste Amplitudenmaximum" gemäß der obigen Definition handelt. Durch diese Definitionen kann sich folglich die Sicherheit (bzw. "Eindeutigkeit") erhöhen, mit der ein Echo als erstes Maximum gewertet wird.

In einigen Ausführungsformen ist das zweite Amplitudenmaximum zwischen 20 cm und 150 cm, insbesondere zwischen 40 cm und 100 cm, von der Antenne des Radarsensors entfernt. Dabei kann - in analoger Weise zu der Definition für das erste Amplitudenmaximum - alternativ oder zusätzlich ein "parametrierbarer Suchbereich" für eine Position des zweiten Amplitudenmaximums definiert werden, für eine Plausibilisierung, ob das zweite Echos tatsächlich das "zweite Amplitudenmaximum" gemäß der obigen Definition ist, das den Füllstand des Behälter anzeigt, bzw. ob es einer Entfernung der Füllgutoberfläche von der Antenne des Radarsensors entspricht.

In einigen Ausführungsformen wird, wenn das erste Amplitudenmaximum mit dem zweiten Amplitudenmaximum überlappt, das Erstellen der Kompensationsechokurve ausgesetzt. Ist nämlich beispielsweise der Behälter vollständig oder fast vollständig gefüllt, kann es sein, dass die Oberseite des Behälters von der Füllgutoberfläche messtechnisch nicht zu trennen ist. Dies kann beispielsweise der Fall sein, wenn die Behälteroberseite und die Füllgutoberfläche z.B. weniger als 5 cm, weniger als 3 cm, weniger als 1 cm, voneinander entfernt sind. In derartigen Fällen kann ein Erstellen oder eine Aktualisierung der Kompensationsechokurve fehlerhaft sein. Die auf diese Weise ermittelte Kompensationsechokurve könnte dann verworfen werden und das Erstellen der Kompensationsechokurve ausgesetzt werden, bis eine klare messtechnische Trennung zwischen Behälteroberseite und Füllgutoberfläche möglich ist. Bei derartigen Fällen könnte zum Beispiel das Überschreiten einer bestimmten Amplitude des ersten Amplitudenmaximums als Indikator für diese Konstellation verwendet werden. Alternativ oder zusätzlich kann automatisiert eine Bestätigung ("Verwerfen?") angefordert werden, z.B. mittels einer Nachricht und/oder eines Knopfdrucks, etc.

In einigen Ausführungsformen ist der Behälter als ein Großpackmittel, IBC (Intermediate Bulk Container), ausgeführt. Da derartige Behälter in zumindest einigen Fällen häufiger gewechselt werden und/oder eine für Radarwellen durchlässige Oberseite aufweisen, kann das beschriebene Verfahren hier besonders effizient eingesetzt werden.

In einer Ausführungsform umfasst das Erkennen des Behälters ein Betätigen einer Taste und/oder ein Senden einer Nachricht. Die Taste kann beispielsweise als ein "Start-Taster" ausgeführt sein, und/oder z.B. als Kontakt, als Sensor (z.B. für Näherung, Berührung, magnetisch, etc.), und/oder RFID-basiert (RFID: Radio-Frequency Identification). Das Senden der Nachricht kann z.B. von einem mobilen Gerät erfolgen, und/oder von einem Server, z.B. als E-Mail, Sofortnachricht, Bluetooth-Signal, etc.

Gemäß der beanspruchten Erfindung basiert das Erkennen des Behälters auf einer Veränderung der Entfernung des ersten Amplitudenmaximums zu dem Radarsensor. Beispielsweise kann der Radarsensor in eine Höhe von ca. 2 m angeordnet sein, so dass das erste Amplitudenmaximum von etwa 2 m Entfernung (z.B. von Boden einer Halle) reflektiert wird, wenn sich kein Behälter unter dem Radarsensor befindet. Wird ein Behälter unter den Radarsensor geschoben, dann ändert sich die Entfernung des ersten Amplitudenmaximums deutlich, und beträgt z.B. nur noch 50 cm. Diese Veränderung der Entfernung des ersten Amplitudenmaximums zu dem Radarsensor kann dann als eine Art "Trigger" verwendet werden, um das automatisierte Erstellen der Kompensationsechokurve zu starten. Nach dem Erkennen des neuen Behälters kann auch noch eine vordefinierte Zeit gewartet werden, z.B. bis der Behälter (mutmaßlich) genau positioniert ist und/oder bis z.B. ein Schwappen einer Flüssigkeit in dem Behälter abgeklungen ist.

In einer Ausführungsform kann das Erkennen des Behälters auf einem Erkennen einer Existenz des zweiten Amplitudenmaximums basieren. So kann es möglich sein, dass, wenn sich kein Behälter unter dem Radarsensor befindet, nur ein Amplitudenmaximum in der erfassten Echokurve feststellbar ist. Sobald ein Behälter unter dem Radarsensor angeordnet ist, sind vorzugsweise zwei Amplitudenmaxima in der erfassten Echokurve feststellbar.

In einigen Ausführungsformen kann das erste Amplitudenmaximum zum Erfassen einer Höhe des Behälters verwendet werden. Dies kann vorteilhafterweise ein Anhaltspunkt zur Identifikation des Behälters sein. Das Merkmal "Höhe" kann alternativ oder zusätzlich noch mit anderen Merkmalen des Behälters kombiniert werden.

Ein Aspekt betrifft eine Verwendung einer Radarsensorvorrichtung zur Füllstandmessung, zur Topologiebestimmung und/oder zur Grenzstandbestimmung eines Füllgutes in einem Behälter.

Ein Aspekt betrifft ein Programmelement, welches, wenn es auf einer Steuer- und Auswerteeinrichtung einer Radarsensorvorrichtung wie oben und/oder nachfolgend beschrieben und/oder auf einer anderen Recheneinheit ausgeführt wird, die Steuer- und Auswerteeinrichtung und/oder die Recheneinheit anweist, das Verfahren wie oben und/oder nachfolgend beschrieben durchzuführen.

Ein Aspekt betrifft ein computerlesbares Medium, auf dem das hier beschriebene Programmelement gespeichert ist.

Es sei noch angemerkt, dass die verschiedenen oben und/oder nachfolgend beschriebenen Ausführungsformen miteinander kombiniert werden können.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
**Fig. 1** schematisch eine Radarsensorvorrichtung gemäß einer Ausführungsform;
**Fig. 2** schematisch eine Radarsensorvorrichtung gemäß einer weiteren Ausführungsform;
**Fig. 3** schematisch eine Radarsensorvorrichtung gemäß einer weiteren Ausführungsform;
**Fig. 4** schematisch eine Radarsensorvorrichtung gemäß einer weiteren Ausführungsform;
**Fig. 5** ein Flussdiagramm mit einem Verfahren gemäß einer Ausführungsform.

### Detaillierte Beschreibung von Ausführungsformen

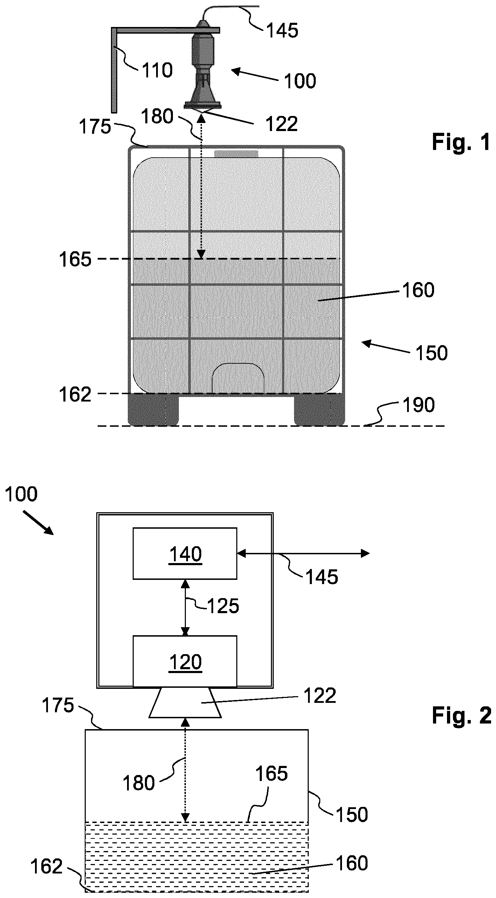

**Fig. 1** zeigt schematisch eine Radarsensorvorrichtung 100 gemäß einer Ausführungsform, in einem Szenario mit einem Behälter 150. Die Radarsensorvorrichtung 100 ist an einer Befestigung 110 oberhalb des Behälters 150 angeordnet. Die Radarsensorvorrichtung 100 kommuniziert seine Messdaten und/oder andere Daten über eine Leitung 145 und/oder über ein drahtloses Modul, z.B. zu einem Server (nicht dargestellt). Für eine Messung sendet die Radarsensorvorrichtung 100, über eine Antenne 122, Radarwellen 180 in Richtung des Behälters 150. Die Radarwellen 180 werden von einer Füllgutoberfläche 165 eines Füllgutes 160 reflektiert und dienen so zur Füllstandmessung, zur Topologiebestimmung und/oder zur Grenzstandbestimmung des Füllgutes 160. Das Füllgut 160 - z.B. ein Medium, eine Flüssigkeit, ein Feststoff und/oder ein Schüttgut - ist in dem Behälter 150 angeordnet. Der Behälter 150 ist in dem gezeigten Ausführungsbeispiel als IBC (Intermediate Bulk Container) ausgeführt. Der Behälter 150 steht auf einem Boden 190, z.B. einer Lager- oder Fabrikhalle.

Bei der Messung werden die Radarwellen 180 nicht nur von der Füllgutoberfläche 165 reflektiert, sondern z.B. auch von einer Oberseite 175 und/oder von einem Boden 162 des Behälters 150. Wenn es sich bei dem Behälter 150 um ein IBC handelt, kann das erste Echo, von der Oberseite 175, eine deutlich niedrigere Amplitude aufweisen als das zweite Echo von der Füllgutoberfläche 165. Weiterhin können die Radarwellen 180 auch von Wänden des Behälters 150 reflektiert werden und/oder von Anhaftungen etc. in dem Behälter 150 (nicht dargestellt). Für eine genaue Messung des Füllstands (etc.) kann eine möglichst eindeutige Erkennung der Füllgutoberfläche 165 aus einer Vielzahl von reflektierten Echos besonders vorteilhaft sein. Dazu kann insbesondere eine Kompensationsechokurve beitragen, die manuell und/oder automatisiert ermittelt werden kann.

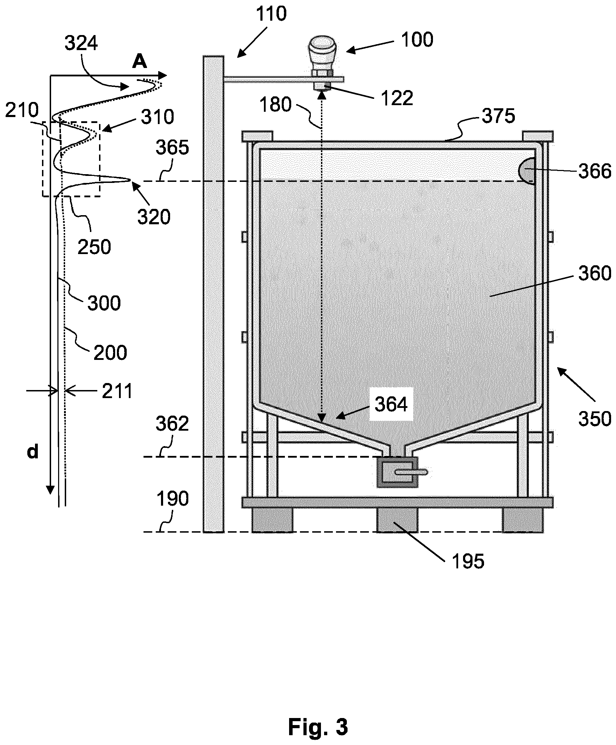

**Fig. 2** zeigt schematisch eine Radarsensorvorrichtung 100 gemäß einer weiteren Ausführungsform, in einem Szenario mit einem Behälter 150. Dabei bezeichnen gleiche Bezugszeichen wie bei **Fig. 1** gleiche oder ähnliche Elemente. Bei Fig. 2 wird deutlich, dass die Radarsensorvorrichtung 100 einen Radarsensor 120 aufweist, der mit der Antenne 122 zumindest elektrisch verbunden ist. Der Radarsensor 120 ist zum Erfassen einer ersten Echokurve 300, 400 (siehe z.B. **Fig. 3**) eingerichtet. Der Radarsensor 120 kann weiterhin auch zum Senden der Radarwellen 180 eingerichtet sein. Der Radarsensor 120 ist, z.B. über eine Leitung 125, mit einer Steuer- und Auswerteeinrichtung 140 verbunden. Die Steuer- und Auswerteeinrichtung 140 kann zum Erstellen der Echokurve und zur Durchführung eines Verfahrens wie oben und/oder nachfolgend beschrieben eingerichtet sein. Zumindest einige Teile der Radarsensorvorrichtung 100 können in einem gemeinsamen Gehäuse und/oder auf einer gemeinsamen Baugruppe angeordnet sein. Zumindest einige Schritte des beschriebenen Verfahrens können auf der Steuer- und Auswerteeinrichtung 140 durchgeführt werden. Die ermittelten Messdaten und/oder andere Daten können von der Radarsensorvorrichtung 100 über eine Leitung 145 und/oder über ein drahtloses Modul (Funkmodul, nicht dargestellt), z.B. zu einem Server und/oder einer Cloud (nicht dargestellt) kommuniziert werden.

**Fig. 3** zeigt schematisch eine Radarsensorvorrichtung 100 gemäß einer weiteren Ausführungsform, in einem Szenario mit einem Behälter 350. Der Behälter 350 ist als IBC ausgeführt und steht beispielsweise auf einem Boden 190, z.B. einer Lager- oder Fabrikhalle, und/oder auf einer Palette 195. In dem dargestellten Ausführungsbeispiel sendet die Radarsensorvorrichtung 100, über die Antenne 122, Radarwellen 180 in Richtung des Behälters 350. Die Radarwellen 180 werden von einer Füllgutoberfläche 365 eines Füllgutes 360 und von weiteren Elementen des Behälters 350 reflektiert und von der Antenne 122 z.B. zu der Steuer- und Auswerteeinrichtung 140 (siehe z.B. **Fig. 2**) der Radarsensorvorrichtung 100 weitergeleitet und z.B. dort verarbeitet. Die Radarsensorvorrichtung 100 erfasst auf diese Weise, aus den reflektierten Radarwellen 180, eine erste Echokurve 300. Die erste Echokurve 300 weist (in der Realität: mindestens) ein erstes lokales Amplitudenmaximum 310 und ein zweites lokales Amplitudenmaximum 320 auf. Die Echokurve 300 weist noch weitere Maxima auf, z.B. ein globales Amplitudenmaximum in einem Nahbereich 324, ein weiteres Amplitudenmaximum von einer Reflexionsstelle 364, einer Anhaftung 366 oder von einem Boden 362 (Echos von 364, 366 und 362 sind zur Vereinfachung nicht dargestellt). Dabei ist deutlich zu sehen, dass in diesem Ausführungsbeispiel das erste Amplitudenmaximum 310 einer Entfernung d der Echokurve 300 zwischen der Antenne 122 und der Oberseite 375 des Behälters 350 entspricht und das zweite Amplitudenmaximum 320 einer Entfernung zwischen der Antenne 122 und der Füllgutoberfläche 365. Das erste Amplitudenmaximum 310 weist eine geringere Entfernung zu einer Antenne 122 des Radarsensors 120 auf als das zweite Amplitudenmaximum 320. In dem dargestellten Ausführungsbeispiel weist das erste Amplitudenmaximum 310 eine niedrigere Amplitude A auf als das zweite Amplitudenmaximum 320; dies kann insbesondere durch eine hohe Durchlässigkeit der Oberseite 375 des Behälters 350 für Radarwellen verursacht sein.

In **Fig. 3** ist weiterhin ein Bereich 250 dargestellt, innerhalb dessen die Position des ersten Amplitudenmaximums vermutet wird. Der Bereich 250 kann vorteilhafterweise als ein "parametrierbarer Suchbereich" für eine Position des ersten Echos 310 verwendet werden, d.h. damit kann plausibilisiert werden, ob es sich bei dem ersten Echos 310 tatsächlich um das "erste Amplitudenmaximum" gemäß der obigen Definition handelt.

Vor einer derartigen Messung, die zum automatisierten Erstellen einer Kompensationsechokurve verwendet werden kann, war eine vorläufige Kompensationsechokurve 210 erstellt worden; diese vorläufige Kompensationsechokurve wird gelegentlich als "Werkstörsignalausblendung" bezeichnet. In der **Fig. 3** ist nur ein Teil der vorläufigen Kompensationsechokurve 210 sichtbar, weil ein großer Abschnitt der vorläufigen Kompensationsechokurve 210 von der - aus dem beschriebenen Verfahren resultierenden - Kompensationsechokurve 200 verdeckt wird. Die vorläufige Kompensationsechokurve 210 ist folglich nur im Bereich des ersten lokalen Amplitudenmaximums 310 sichtbar. In der gezeigten Darstellung ist daher die Maximumbildung der vorläufigen Kompensationsechokurve 210 mit dem ersten Amplitudenmaximum 310 deutlich erkennbar. Weiterhin ist sowohl der Offset 211 der vorläufigen Kompensationsechokurve 210 als auch der Offset 211 der Kompensationsechokurve 200 zu der gemessenen ersten Echokurve 300 deutlich erkennbar.

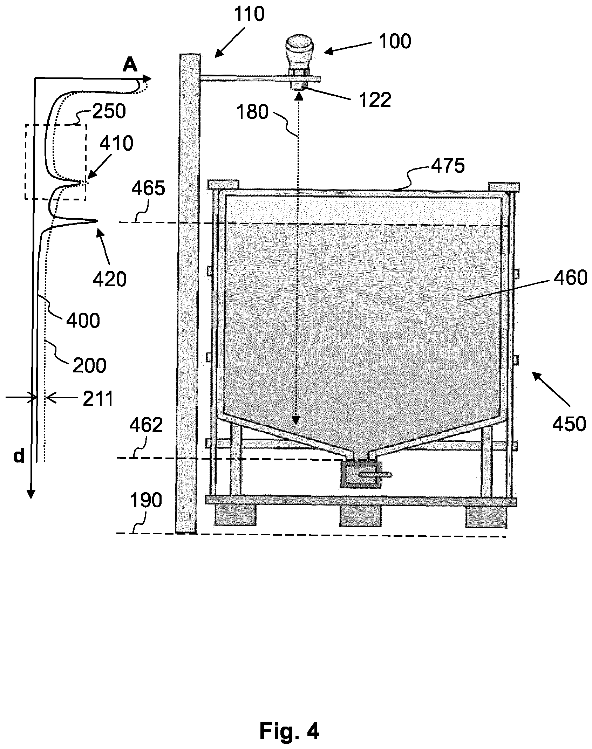

**Fig. 4** zeigt schematisch eine Radarsensorvorrichtung 100 gemäß einer weiteren Ausführungsform, in einem Szenario mit einem Behälter 450. Gleiche Bezugszeichen bezeichnen dabei gleiche oder ähnliche Elemente wie in **Fig. 3** dargestellt. Der Behälter 450 ist als IBC ausgeführt und deutlich niedriger als der Behälter 350 von **Fig. 3**. Die Kompensationsechokurve 200 von **Fig. 3** ist daher nicht verwendbar. Daher kann vorteilhafterweise bei einem Wechsel des Behälters 350 zu dem Behälter 450 ein automatisiertes Erstellen der Kompensationsechokurve 200 für den Behälter 450 initiiert werden. Dazu werden die ersten und zweiten Amplitudenmaxima 410 bzw. 420 erfasst; die vorläufige Kompensationsechokurve 210 war schon "ab Werk" erstellt worden. Das Erstellen der Kompensationsechokurve 200 wird wieder mittels Maximumbildung der vorläufigen Kompensationsechokurve 210 mit dem ersten Amplitudenmaximum 410 durchgeführt.

Zur besseren Identifikation des erste Amplitudenmaximums 410 kann ein Bereich 250 definiert sein in den das erste Amplitudenmaximum 410 fallen muss, um als solches erkannt zu werden. Der Bereich 250 von **Fig. 4** und von **Fig. 3** weist dieselbe Größe auf, eine Entfernung zwischen 20 cm und 150 cm, insbesondere zwischen 40 cm und 100 cm, von der Antenne 122 des Radarsensors 120. Der Wechsel (z.B.) von dem Behälter 350 zu dem Behälter 450 kann z.B. durch Drücken einer Taste initiiert werden, und/oder dadurch, dass das erste Amplitudenmaximum 410, wenn kein Behälter vorhanden ist, von dem Boden 190 und/oder von der Palette 195 reflektiert wird. Insbesondere fällt dann das erste Amplitudenmaximum 410 nicht mehr in den Bereich 250.

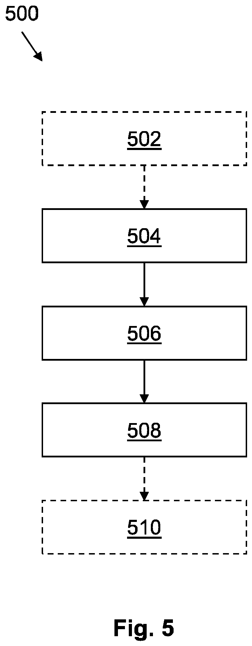

**Fig. 5** zeigt ein Flussdiagramm mit einem Verfahren 500 zum automatisierten Erstellen einer Kompensationsechokurve 200 gemäß einer Ausführungsform (siehe z.B. **Fig. 3** oder **Fig. 4**)**.** In einem optionalen Schritt 502 wird ein Behälter 150, 350, 450 erkannt, wenn und/oder sobald er unter einer Radarsensorvorrichtung 100 angeordnet wird. In einem Schritt 504 wird eine vorläufige Kompensationsechokurve 210 erstellt. Diese vorläufige Kompensationsechokurve 210 entspricht einer Echokurve eines leeren Behälters 215 plus ein Offset 211. In einem Schritt 506 wird eine erste Echokurve 300, 400 erfasst, wobei die erste Echokurve 300, 400 mindestens ein erstes Amplitudenmaximum 310, 410 und ein zweites Amplitudenmaximum 320, 420 aufweist. Dabei weist das erste Amplitudenmaximum 310, 410 eine geringere Entfernung zu einer Antenne 122 des Radarsensors 120 auf als das zweite Amplitudenmaximum 320, 420. In einem Schritt 508 wird die Kompensationsechokurve 200 durch Bildung eines Maximums aus der vorläufigen Kompensationsechokurve 210 und dem ersten Amplitudenmaximum 310, 410 erstellt. In einem (für das hier beschriebe Verfahren optionalen) Schritt 510 kann die Radarsensorvorrichtung 100 zur Füllstandmessung, zur Topologiebestimmung und/oder zur Grenzstandbestimmung eines Füllgutes 160, 360, 460 in dem Behälter 150, 350, 450 eingesetzt werden, unter Verwendung der Kompensationsechokurve 200.

### Liste der Bezugszeichen

- 100: Füllstandmessgerät
- 110: Befestigung
- 120: Radarsensoreinheit
- 122: Antenne
- 125: Leitung
- 140: Auswerteeinheit
- 145: Leitung
- 150, 350, 450: Behälter
- 160, 360, 460: Füllgut
- 162, 362, 462: Behälterboden
- 165, 365, 465: Füllstand, Füllgutoberfläche
- 175, 375, 475: Oberseite des Behälters
- 180: Radarwellen
- 190: Boden, z.B. einer Halle
- 195: Palette
- 200: Kompensationsechokurve
- 210: vorläufige Kompensationsechokurve, Werkstörsignalausblendung
- 211: Offset
- 250: Bereich
- 300, 400: erste Echokurve
- 310, 410: erstes Amplitudenmaximum
- 320, 420: zweites Amplitudenmaximum
- 322: Breite des zweiten Amplitudenmaximums
- 324: Nahbereich
- 364: Reflexionsstelle
- 366: Anhaftung
- 500: Verfahren
- 502 - 508: Schritte

## Patentansprüche

1. Verfahren zum automatisierten Erstellen einer Kompensationsechokurve (200) für eine Füllstandmessung eines Füllgutes (160, 360, 460) in einem Behälter (150, 350, 450) mittels eines Radarsensors (120), wobei der Radarsensor (120) an einer Befestigung (110) oberhalb des Behälters (150) angeordnet ist und wobei der Behälter (150, 350, 450) eine Oberseite (175) aufweist, die für Radarwellen durchlässig ist, das Verfahren aufweisend die Schritte:
erkennen des Behälters (150, 350, 450);
erstellen einer vorläufigen Kompensationsechokurve (210), wobei die vorläufige Kompensationsechokurve (210) einer Echokurve eines leeren Behälters (215) entspricht;
erfassen einer ersten Echokurve (300, 400), wobei die erste Echokurve (300, 400) mindestens ein erstes Amplitudenmaximum (310, 410) und ein zweites Amplitudenmaximum (320, 420) aufweist, wobei das erste Amplitudenmaximum (310, 410) eine geringere Entfernung zu einer Antenne (122) des Radarsensors (120) aufweist als das zweite Amplitudenmaximum (320, 420); und
erstellen der Kompensationsechokurve (200) durch Bildung eines Maximums aus der vorläufigen Kompensationsechokurve (210) und dem ersten Amplitudenmaximum (310, 410).

2. Verfahren nach Anspruch 1,
wobei die vorläufige Kompensationsechokurve (210) und/oder die Kompensationsechokurve (200) zusätzlich einen Offset (211) aufweist.

3. Verfahren nach einem der vorhergehenden Ansprüche,
wobei das erste Amplitudenmaximum (310, 410) zwischen 20 cm und 150 cm, insbesondere zwischen 40 cm und 100 cm, von der Antenne (122) des Radarsensors (120) entfernt ist.

4. Verfahren nach einem der vorhergehenden Ansprüche,
wobei das zweite Amplitudenmaximum (320, 420) zwischen 20 cm und 150 cm, insbesondere zwischen 40 cm und 100 cm, von der Antenne (122) des Radarsensors (120) entfernt ist.

5. Verfahren nach einem der vorhergehenden Ansprüche,
wobei, wenn das erste Amplitudenmaximum (310, 410) mit dem zweiten Amplitudenmaximum (320, 420) überlappt, das Erstellen der Kompensationsechokurve (200) ausgesetzt wird.

6. Verfahren nach einem der vorhergehenden Ansprüche,
wobei der Behälter (150, 350, 450) als ein Großpackmittel, Intermediate Bulk Container, IBC, ausgeführt ist.

7. Verfahren nach Anspruch 1,
wobei das Erkennen des Behälters (150, 350, 450) ein Betätigen einer Taste und/oder ein Senden einer Nachricht umfasst.

8. Verfahren nach Anspruch 1,
wobei das Erkennen des Behälters (150, 350, 450) auf einer Veränderung der Entfernung des ersten Amplitudenmaximums (310, 410) zu dem Radarsensor (120) basiert.

9. Verfahren nach Anspruch 1,
wobei das Erkennen des Behälters (150, 350, 450) auf einem Erkennen einer Existenz des zweiten Amplitudenmaximums (320, 420) basiert.

10. Verfahren nach einem der vorhergehenden Ansprüche,
wobei das erste Amplitudenmaximum (310, 410) zum Erfassen einer Höhe (175, 375, 475) des Behälters (150, 350, 450) verwendet wird.

11. Radarsensorvorrichtung (100) für eine Füllstandmessung eines Füllgutes (160, 360, 460) in einem Behälter (150, 350, 450), aufweisend:
einen Radarsensor (120), der zum Erfassen einer ersten Echokurve (300, 400) gemäß einem Verfahren nach einem der Ansprüche 1 - 10 eingerichtet ist; und
eine Steuer- und Auswerteeinrichtung (140), die zur Durchführung des Verfahrens nach einem der vorhergehenden Ansprüche eingerichtet ist.

12. Verwendung einer Radarsensorvorrichtung (100) nach Anspruch 11 zur Füllstandmessung, zur Topologiebestimmung und/oder zur Grenzstandbestimmung eines Füllgutes (160, 360, 460) in einem Behälter (150, 350, 450).

13. Programmelement, welches, wenn es auf einer Steuer- und Auswerteeinrichtung (140) einer Radarsensorvorrichtung (100) nach Anspruch 11 und/oder auf einer anderen Recheneinheit ausgeführt wird, die Steuer- und Auswerteeinrichtung (140) und/oder die Recheneinheit anweist, das Verfahren nach einem der Ansprüche 1 bis 10 durchzuführen.

14. Computerlesbares Medium, auf dem ein Programmelement nach dem vorhergehenden Anspruch gespeichert ist.

## Claims

1. A method for automated generating a compensation echo curve (200) for a fill level measurement of a filling material (160, 360, 460) in a container (150, 350, 450) by means of a radar sensor (120), wherein the radar sensor (120) is arranged on a mounting (110) above the container (150) and wherein the container (150, 350, 450) has an upper side (175) which is permeable to radar waves, the method comprising the steps:
recognizing the container (150, 350, 450);
creating a preliminary compensation echo curve (210), wherein the preliminary compensation echo curve (210) corresponds to an echo curve of an empty container (215);
detecting a first echo curve (300, 400), wherein the first echo curve (300, 400) comprises at least a first amplitude maximum (310, 410) and a second amplitude maximum (320, 420), wherein the first amplitude maximum (310, 410) has a smaller distance to an antenna (122) of the radar sensor (120) than the second amplitude maximum (320, 420); and
creating the compensation echo curve (200) by forming a maximum from the preliminary compensation echo curve (210) and the first amplitude maximum (310, 410).

2. The method according to claim 1,
wherein the preliminary compensation echo curve (210) and/or the compensation echo curve (200) additionally has an offset (211).

3. The method according to any one of the preceding claims,
wherein the first amplitude maximum (310, 410) is between 20 cm and 150 cm, in particular between 40 cm and 100 cm, away from the antenna (122) of the radar sensor (120).

4. The method according to any one of the preceding claims,
wherein the second amplitude maximum (320, 420) is between 20 cm and 150 cm, in particular between 40 cm and 100 cm, away from the antenna (122) of the radar sensor (120).

5. The method according to any one of the preceding claims,
wherein, when the first amplitude maximum (310, 410) overlaps with the second amplitude maximum (320, 420), the generation of the compensation echo curve (200) is suspended.

6. The method according to any one of the preceding claims,
wherein the container (150, 350, 450) is designed as an intermediate bulk container, IBC.

7. The method according to claim 1,
wherein recognizing the container (150, 350, 450) comprises pressing a button and/or sending a message.

8. The method according to claim 1,
wherein detecting the container (150, 350, 450) is based on a change of the distance of the first maximum amplitude (310, 410) to the radar sensor (120).

9. The method according to claim 1,
wherein detecting the container (150, 350, 450) is based on detecting an existence of the second amplitude maximum (320, 420).

10. The method according to any one of the preceding claims,
wherein the first amplitude maximum (310, 410) is used to detect a height (175, 375, 475) of the container (150, 350, 450).

11. A radar sensor device (100) for fill level measurement of a filling material (160, 360, 460) in a container (150, 350, 450), comprising:
a radar sensor (120) configured for detecting a first echo curve (300, 400) according to a method according to any one of claims 1 - 10; and
a control and evaluation device (140) configured for carrying out the method according to one of the preceding claims.

12. Use of a radar sensor device (100) according to claim 11 for fill level measurement, for topology determination and/or for limit level determination of a filling material (160, 360, 460) in a container (150, 350, 450).

13. A program element which, when executed on a control and evaluation device (140) of a radar sensor device (100) according to claim 11 and/or on another computing unit, instructs the control and evaluation device (140) and/or the computing unit to perform the method according to any one of claims 1 to 10.

14. A computer-readable medium on which a program element according to the preceding claim is stored.

## Revendications

1. Procédé de création automatisée d'une courbe d'écho de compensation (200) pour une mesure de niveau de remplissage d'un produit de remplissage (160, 360, 460) dans un conteneur (150, 350, 450) au moyen d'un capteur radar (120), le capteur radar (120) étant disposé sur une fixation (110) au-dessus du conteneur (150) et le conteneur (150, 350, 450) présentant une face supérieure (175) qui est perméable aux ondes radar, le procédé présentant les étapes de :
reconnaître le conteneur (150, 350, 450) ;
créer une courbe d'écho de compensation provisoire (210), la courbe d'écho de compensation provisoire (210) correspondant à une courbe d'écho d'un conteneur vide (215) ;
détecter une première courbe d'écho (300, 400), la première courbe d'écho (300, 400) présentant au moins un premier maximum d'amplitude (310, 410) et un deuxième maximum d'amplitude (320, 420), le premier maximum d'amplitude (310, 410) présentant une distance d'une antenne (122) du capteur radar (120) inférieure à celle du deuxième maximum d'amplitude (320, 420) ; et
créer la courbe d'écho de compensation (200) en formant un maximum à partir de la courbe d'écho de compensation provisoire (210) et du premier maximum d'amplitude (310, 410).

2. Procédé selon la revendication 1,
dans lequel la courbe d'écho de compensation provisoire (210) et/ou la courbe d'écho de compensation (200) présente en outre un décalage (211).

3. Procédé selon l'une des revendications précédentes,
dans lequel le premier maximum d'amplitude (310, 410) est situé entre 20 cm et 150 cm, en particulier entre 40 cm et 100 cm, de l'antenne (122) du capteur radar (120).

4. Procédé selon l'une des revendications précédentes,
dans lequel le deuxième maximum d'amplitude (320, 420) est situé entre 20 cm et 150 cm, en particulier entre 40 cm et 100 cm, de l'antenne (122) du capteur radar (120).

5. Procédé selon l'une des revendications précédentes,
dans lequel, lorsque le premier maximum d'amplitude (310, 410) chevauche le deuxième maximum d'amplitude (320, 420), la création de la courbe d'écho de compensation (200) est suspendue.

6. Procédé selon l'une des revendications précédentes,
dans lequel le conteneur (150, 350, 450) est réalisé sous la forme d'un grand récipient pour vrac, Intermediate Bulk Container, IBC.

7. Procédé selon la revendication 1,
dans lequel la reconnaissance du conteneur (150, 350, 450) comprend l'actionnement d'un bouton et/ou l'envoi d'un message.

8. Procédé selon la revendication 1,
dans lequel la reconnaissance du conteneur (150, 350, 450) est basée sur une modification de la distance du premier maximum d'amplitude (310, 410) au capteur radar (120).

9. Procédé selon la revendication 1,
dans lequel la reconnaissance du conteneur (150, 350, 450) est basée sur une reconnaissance de l'existence du deuxième maximum d'amplitude (320, 420).

10. Procédé selon l'une des revendications précédentes,
dans lequel le premier maximum d'amplitude (310, 410) est utilisé pour détecter une hauteur (175, 375, 475) du conteneur (150, 350, 450).

11. Dispositif capteur radar (100) pour une mesure de niveau de remplissage d'un produit de remplissage (160, 360, 460) dans un conteneur (150, 350, 450), présentant :
un capteur radar (120) conçu pour détecter une première courbe d'écho (300, 400) selon un procédé selon l'une des revendications 1 à 10 ; et
un moyen de commande et d'évaluation (140) conçu pour mettre en oeuvre le procédé selon l'une des revendications précédentes.

12. Utilisation d'un dispositif capteur radar (100) selon la revendication 11 pour la mesure de niveau de remplissage, la détermination de topologie et/ou la détermination de niveau limite d'un produit de remplissage (160, 360, 460) dans un conteneur (150, 350, 450).

13. Élément de programme qui, lorsqu'il est exécuté sur un moyen de commande et d'évaluation (140) d'un dispositif capteur radar (100) selon la revendication 11 et/ou sur une autre unité de calcul, amène le moyen de commande et d'évaluation (140) et/ou l'unité de calcul à mettre en oeuvre le procédé selon l'une des revendications 1 à 10.

14. Support lisible par ordinateur sur lequel est enregistré un élément de programme selon la revendication précédente.
